# EUROPÄISCHE PATENTSCHRIFT

(11) **EP 3 592 578 B1**
(45) Veröffentlichungstag und Bekanntmachung des Hinweises auf die Patenterteilung: **03.03.2021**
(21) Anmeldenummer: 18703889.8
(22) Anmeldetag: 18.01.2018
(51) Int. Cl.: B60D 1/01, B60D 1/60, B62D 53/12

(54) **SCHMUTZDECKELANORDNUNG, SCHMUTZDECKELVORRICHTUNG FÜR DIESE ANORDNUNG SOWIE KUPPELVERFAHREN DAMIT**
DIRT PROTECTION COVER ARRANGEMENT, DIRT PROTECTION COVER DEVICE FOR SAID ARRANGEMENT, AND COUPLING METHOD INVOLVING SAME
AGENCEMENT DE COUVERCLE ANTI-POUSSIÈRE, DISPOSITIF DE COUVERCLE ANTI-POUSSIÈRE POUR CET AGENCEMENT ET PROCÉDÉ D'ACCOUPLEMENT À CELUI-CI

(30) Priorität: 09.03.2017 DE 202017101339 U
(43) Veröffentlichungstag der Anmeldung: 15.01.2020
(73) Patentinhaber: Hamburger Patent Schmiede GmbH, 21244 Buchholz (DE)
(72) Erfinder: METTERNICH, Heinz-Rüdiger, 21279 Eversen-Heide (DE)
(74) Vertreter: Hansen, Jochen
(86) Internationale Anmeldenummer: PCT/DE2018/100042
(87) Internationale Veröffentlichungsnummer: WO 2018/161987

(56) Entgegenhaltungen:
- DE-U1-202016 102 707

## Beschreibung

Die Erfindung betrifft eine Schmutzdeckelanordnung mit einem Sattelauflieger und einem Zugfahrzeug zum Verschliessen eines hohlgebohrten Königszapfens am Sattelauflieger, insbesondere für eine automatische Sattelkupplung, wobei der Königszapfen an der als Gegenlager für eine Sattelplatte des Zugfahrzeugs dienenden Unterseite des Sattelaufliegers angeordnet ist. Ferner betrifft die Erfindung eine Schmutzdeckelvorrichtung für diese Anordnung sowie ein Kuppelverfahren damit.

Im Straßengüterverkehr hat sich der Transport von Waren mit sogenannten Sattelzügen durchgesetzt. Dabei handelt es sich um ein Gespann aus einem Zugfahrzeug mit einer Sattelplatte und einem auf der Sattelplatte des Zugfahrzeugs mit einem Teil seines Gewichts aufliegenden Sattelauflieger, der das Transportgut aufnimmt. Die Verbindung zwischen Zugfahrzeug und Sattelauflieger wird über eine sogenannte Sattelkupplung erreicht. Dafür ist am Sattelauflieger ein Königszapfen orthogonal nach unten zeigend an der als Gegenlager zur Sattelplatte des Zugfahrzeugs dienenden Unterseite des Sattelaufliegers angeordnet. Da die Sattelkupplung somit auf der zur Straße gewandten Unterseite des Sattelaufliegers meist unmittelbar über der bzw. den Hinterachsen der Zugmaschine angeordnet ist, ist die Sattelkupplung starker Verschmutzung ausgesetzt.

Ferner gibt es neuere Entwicklungen zur Automatisierung der Sattelkupplung, insbesondere zur automatischen Verbindung der elektrischen Leitungen sowie der Bremsluftleitungen zum Sattelauflieger, die bei der mechanischen Verrastung der an der Sattelplatte angeordneten Klauen zur Umgreifung des Königszapfens über entsprechende Hubstecker in einer axialen Bohrung im Königszapfen eingreifen, wie in der EP 1 240 067 B1 und der DE 20 2016 102 707 U1 beschrieben. Sobald der Sattelauflieger mit einem hohl gebohrten Königszapfen in einer entsprechenden automatischen Kupplung gekuppelt ist, ist ein Schmutzeintritt in das empfindliche Innere dieser zusätzlichen Kontaktierung für elektrische Leiter und Bremsluft ausgeschlossen. Jedoch kann ein entsprechender Sattelauflieger im nicht gekuppelten Zustand, beispielsweise bei seiner Abstellung verschmutzen. Eine deutlich stärkere Verschmutzung ist bei einer Kupplung eines solcher Art vorbereiteten Sattelaufliegers mit einer Zugmaschine ohne automatischem Kupplungssystem anzunehmen, da die Hohlbohrung mit den darin befindlichen empfindlichen Kontakten für Umwelteinflüsse frei zugänglich ist. Insbesondere für den zweiten Fall bei einer Kupplung an einer Zugmaschine ohne automatischer Verbindung der elektrischen und pneumatischen Leitungen würde zudem das Aufwirbeln von Schmutz etc. während des Fahrbetriebs erheblich zur Verschmutzung auch gerade der Hohlbohrung des Königszapfens des Sattelaufliegers beitragen.

Ferner ist es bekannt, kappen- oder topfförmige Elemente über den Königszapfen zu setzen und dort zu verschließen, um das unbefugte Ankuppeln einer Zugmaschine an einen abgestellten Sattelauflieger zu unterbinden. Ein Ankuppeln ist erst wieder möglich, wenn die berechtigte Person diese Kappe mit dem zugehörigen Schloss öffnet. Nebenbei ist damit der Königszapfen für abgestellte Sattelauflieger vor einer Verschmutzung geschützt. Während des Fahrbetriebs ist diese Sicherung jedoch nicht am Königszapfen montiert und kann somit einer Verschmutzung des hohlgebohrten Königszapfens nicht vorbeugen.

Aufgabe der Erfindung ist es jedoch, die empfindlichen Innereien eines hohl gebohrten Königszapfens zuverlässig vor einer Verschmutzung zu schützen.

Gelöst wird diese Aufgabe mit einer Schmutzdeckelanordnung gemäß Anspruch 1, einer diesbezüglichen Schmutzdeckelvorrichtung und einem Kuppelverfahren nach Anspruch 11.

Dadurch, dass eine Schmutzdeckelvorrichtung an der Unterseite des Sattelaufliegers anliegend und drehbar um den Königszapfen angeordnet ist, wobei diese einen Schmutzdeckel zur Abdeckung der darin vorgesehenen Bohrung aufweist und der Schmutzdeckel beim Kuppelvorgang von einer die Bohrung im Königszapfen abdeckenden Grundstellung in eine die Bohrung freigebenden Kuppelstellung verschiebbar an der Schmutzdeckelvorrichtung ausgebildet ist, kann die Bohrung im Königszapfen durch den Schmutzdeckel im ungekuppelten Zustand des Sattelaufliegers geschützt werden, wobei der Schmutzdeckel automatisch beim Kuppelvorgang die Bohrung im Königszapfen zur Kupplung der darin aufgenommenen elektrischen und pneumatischen Verbindungen freigibt. Wird der Auflieger mit Schmutzdeckelvorrichtung an einem Zugfahrzeug ohne automatische Sattelkupplung gekuppelt, verbleibt der Schmutzdeckel in seiner Schutzstellung, die Bohrung im Königszapfen abdeckend. Folglich kann dann während der Fahrt aufgewirbelter Schmutz nicht in die Bohrung und damit die empfindlichen Kontakte etc. des Königzapfens eindringen. Dabei stört die Schmutzdeckelvorrichtung an der Unterseite des Sattelaufliegers durch seine Bewegbarkeit, nämlich Drehbarkeit um den Königszapfen nicht die Beweglichkeit der Sattelkupplung zwischen Zugfahrzeug und Sattelauflieger, unabhängig davon, ob das Zugfahrzeug mit einer automatischen Sattelkupplung ausgestattet ist oder nicht.

Um das Öffnen und Schließen des Schmutzdeckels zuverlässig bewerkstelligen zu können, weist die Schmutzdeckelvorrichtung zum Verschieben des Schmutzdeckels eine Lateralführung mit einem Schubelement auf, wobei das Schubelement in zum Königszapfen radialer Richtung, parallel zur Unterseite des Sattelaufliegers bewegbar ausgebildet ist und mit dem Schmutzdeckel gekoppelt ist.

Bevorzugt ist an dem Schubelement ein Mitnehmer vorgesehen, der beim Kuppelvorgang von einem an der Sattelplatte vorgesehenen Betätigungsmittel des einkuppelnden Zugfahrzeugs mitnehmbar ausgebildet ist, wobei nur Zugfahrzeuge mit automatischer Sattelkupplung dieses Betätigungsmittel an der Sattelplatte aufweisen. Damit ist in mechanisch einfacher Weise gelöst, dass beim Annähern der Sattelplatte des Zugfahrzeugs an den Königszapfen das Schubelement und damit der Deckel lateral verschoben wird, wenn das Zugfahrzeug ein Betätigungsmittel aufweist, also eine automatische Sattelkupplung hat. Anderenfalls verbleibt der Schmutzdeckel auf dem Königszapfen.

Um ein sicheres Wiederverschließen der Schmutzdeckelvorrichtung nach dem Abkoppeln des Zugfahrzeugs vom Sattelauflieger zu gewährleisten, ist in der Lateralführung eine erste Feder vorgesehen, die das Schubelement in Richtung der die Bohrung im Königszapfen abdeckenden Grundstellung von der ersten Feder vorbelastet hält.

Wenn an dem Schubelement eine zweite Feder vorgesehen ist, die den Schmutzdeckel von dieser zweiten Feder belastet in axialer Richtung auf die freie Stirnseite des Königszapfens hält, wird über diese zweite Feder ein ausreichender Anpressdruck des Schmutzdeckels gerichtet auf die Stirnseite des Königszapfens sichergestellt. Zusätzlich kann die Innenseite des Schmutzdeckels eine dichtende, gummierte Beschichtung aufweisen, sodass ein Schmutzeintrag sowie weitgehend auch Feuchtigkeitseintrag in die Bohrung des Königszapfens ausgeschlossen ist.

Wenn die Schmutzdeckelvorrichtung eine Breite aufweist, die kleiner als die Weite des Einführungsschlitzes der Sattelplatte ist, passt die Schmutzdeckelvorrichtung zwischen den Einführungsschlitz der Sattelplatte, sodass die Bewegungsübertragung für den Schmutzdeckel möglichst kurz ausgestaltet werden kann. Ferner ist es bevorzugt, dass die Aufbauhöhe der Schmutzdeckelvorrichtung kleiner gleich die Höhe des Königszapfens ist. Dabei ist lediglich sicherzustellen, dass der Schmutzdeckel problemlos auf die Stirnfläche des Königszapfens auf- und abgleiten kann. Selbstverständlich kann es erforderlich sein, dass der Mitnehmer der Schmutzdeckelvorrichtung die vorangehend definierte maximale Breite und/oder maximale Höhe überschreitet, damit dieser beim Kuppelvorgang von der Sattelplatte oder einem daran angeordneten Element betätigt werden kann.

Damit sich die Schmutzdeckelvorrichtung beim Kuppelvorgang möglichst rasch im Einführungsschlitz der Sattelplatte zentriert, weist die Schmutzdeckelvorrichtung in Einbausituation an ihren Seitenflanken beidseitig pfeilförmig abgespreizte Blattfedern auf.

Dadurch, dass der Königszapfen einen zylindersymmetrischen, nach unten von der Unterseite des Sattelaufliegers vorstehenden Königszapfenkörper hat, wobei im der Unterseite nahen Teil des Königszapfenkörpers eine Führungsnut vorgesehen ist, in der die Schmutzdeckelvorrichtung drehbar um den Königszapfen gehalten ist, wird die Befestigung der Schmutzdeckelvorrichtung am Königszapfen bei gleichzeitiger Gewährleistung der Drehbarkeit um diesen Königszapfen technisch einfach gelöst. Dieser Teil des Königszapfenkörpers kann dabei ohne Probleme eine kleine Führungsnut oder auch mehrere umlaufende Führungsnuten auch hinsichtlich seiner geforderten Stabilität vertragen. In der Führungsnut bzw. in den Führungsnuten werden dann darauf abgestimmte Umschlingungsmittel an der Schmutzdeckelvorrichtung angeordnet, sodass die Schmutzdeckelvorrichtung mit dem montierten Umschlingungsmittel fest in der Führungsnut, aber frei drehbar um den Königszapfen und an der Unterseite des Sattelaufliegers anliegend angebracht ist.

Entscheidend ist, dass die Schmutzdeckelvorrichtung an einem Sattelauflieger an dessen Königszapfen, um diesen frei drehbar, angeordnet ist. Entsprechend können derartige Sattelauflieger von Zugmaschinen mit Sattelplatte in der üblichen Weise angekuppelt werden. Die um den Königszapfen verdrehbare Schmutzdeckelvorrichtung stört weder den Kuppelvorgang noch die freie Drehbarkeit der Sattelplattenverbindung, bildet somit keine Einschränkung der Funktionsfähigkeit des Sattelzuges.

Sollte das Zugfahrzeug keine automatische Sattelkupplung mit elektrischen und pneumatischen Kontakten über eine Steckverbindung in die Bohrung des Königszapfens haben, wird in diesem Fall die Sattelplatte der Zugmaschine (Zugfahrzeug) keinen Niederhalter aufweisen, sodass beim Kuppelvorgang an den Auflieger mit Schmutzdeckelvorrichtung der Schmutzdeckel nicht vom Königszapfen entfernt wird. Die Schutzfunktion des Schmutzdeckels bleibt also auch im mit einem "normalen" Zugfahrzeug gekuppelten Sattelauflieger voll erhalten. Nur wenn ein Zugfahrzeug mit Sattelplatte einen Niederhalter bzw. ein entsprechendes Bauteil zum Betätigen des Mitnehmers aufweist, wird beim Kuppelvorgang der Mitnehmer der Schmutzdeckelvorrichtung gegen die Kraft der ersten Feder lateral verschoben, sodass sich der Schmutzdeckel vom Königszapfen entfernt und die Bohrung im Königszapfen zum Verbinden der elektrischen und pneumatischen Kontakte freigibt.

Nachfolgend wird ein Ausführungsbeispiel der Erfindung anhand der beiliegenden Zeichnungen detailliert beschrieben.

Darin zeigt:
- Fig. 1: eine räumliche Darstellung einer Sattelplatte und einer Schmutzdeckelvorrichtung unmittelbar vor dem Kuppelvorgang,
- Fig. 2: eine Ansicht auf diese Situation von unten und
- Fig. 3a-d: eine teils geschnittene Seitenansicht des Kuppelvorganges in vier Stadien.

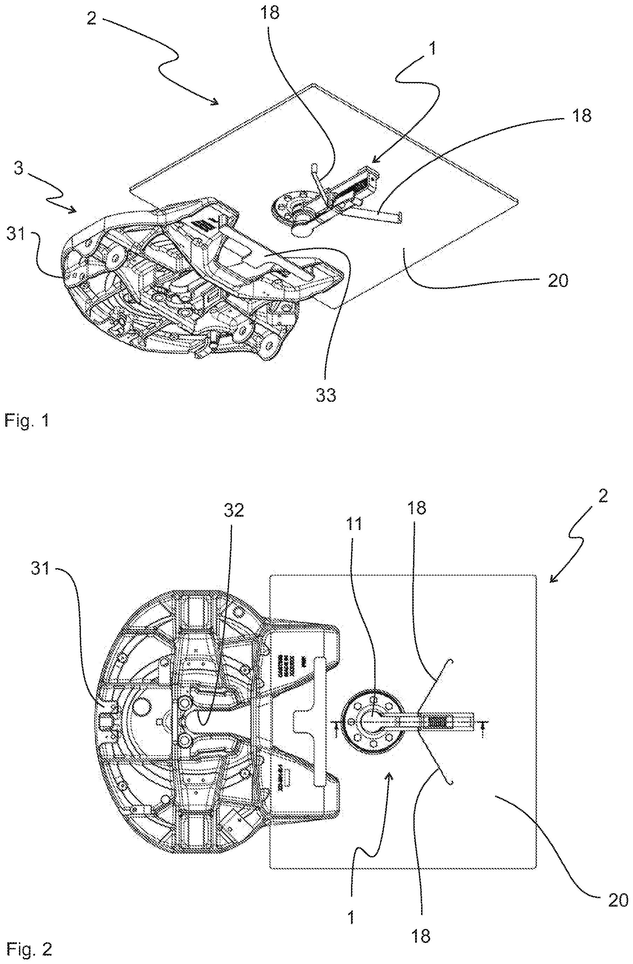

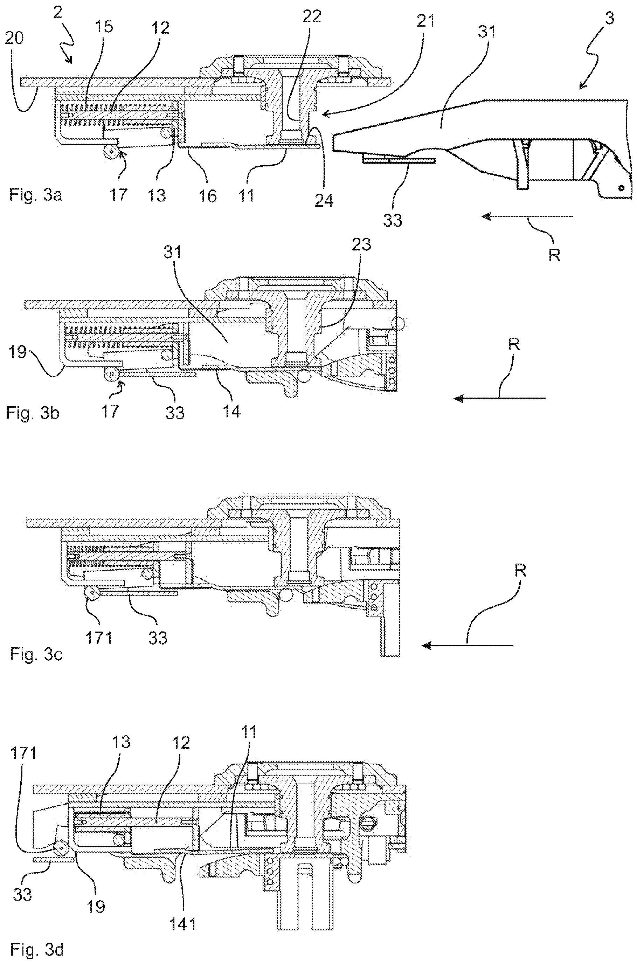

In Fig. 1 ist in einer räumlichen Ansicht von schräg unten eine Schmutzdeckelanordnung dargestellt. Von einem Sattelauflieger 2 ist der Übersichtlichkeit halber lediglich eine Unterseite 20 dargestellt, an dessen Zentrum sich ein Königzapfen 21 mit seiner Achse orthogonal nach unten erstreckend angeordnet ist. Der Königzapfen 21 ist in geschnittener Darstellung besser beispielsweise in Fig. 3a ersichtlich. Ferner ist in Fig. 1 eine Sattelplatte 31 eines sonst nicht näher dargestellten Zugfahrzeugs 3 so angeordnet, dass bei weiterer Rückwärtsfahrt des Zugfahrzeugs 3 die Sattelplatte 31 mit dem Königzapfen 21 als Sattelkupplungsverbindung verrasten würde.

Ferner ist diese Situation in Fig. 2 in einer Unteransicht dargestellt. In Fig. 2 ist ein für Sattelplatten 31 typischer Einführungsschlitz 32 erkennbar, in dem der Königszapfen 21 des Sattelaufliegers 2 bei Rückwärtsfahrt des Zugfahrzeugs 3 eingeführt wird und am Ende des Einführungsschlitzes 32 mit den Klauen der Sattelkupplung fest verschlossen und damit gekuppelt wird.

Auf dem Königzapfen 21 ist eine Schmutzdeckelvorrichtung 1 um den Königszapfen 21 frei drehbar und an der Unterseite 20 des Sattelaufliegers 2 anliegend angeordnet. Die Schmutzdeckelvorrichtung 1 weist einen Schmutzdeckel 11 auf, der eine koaxiale Bohrung 22 im Königszapfen 21 an seiner unteren Stirnseite 24 überdeckt, wie es in den Fig. 1, 2 und 3a ersichtlich ist.

Die drehbare Halterung der Schmutzdeckelvorrichtung 1 an dem Königszapfen 21 ist dadurch gelöst, dass im Königszapfen 21 in seinem nahe seiner Befestigung an der Unterseite 20 des Sattelaufliegers 2 befindlichen, materialstärkeren Teil des Königzapfenkörpers eine umlaufende Führungsnut 23 vorgesehen und durch ein in der Führungsnut 23 aufgenommenes Umschlingungselement befestigt ist. Im in den Fig. 3a bis 3d dargestellten Ausführungsbespiel weist folglich der Königszapfen 21 an seinem Wurzelbereich des Königszapfenkörpers zwei umlaufende Führungsnuten 23 auf. Das Umschlingungselement ist in den Nuten 23 der Übersichtlichkeit halber nicht dargestellt.

Ferner weist die Schmutzdeckelvorrichtung 1 eine Lateralführung 12 auf, in der ein lateral verschiebbares Schubelement 13 geführt ist. An dem Schubelement 13 ist ein Verbindungselement 14 angebracht, das mit dem Schmutzdeckel 11 an seinem anderen Ende verbunden ist. Ferner ist am Schubelement 13 ein Mitnehmer 17 vorgesehen, der beim Kuppelvorgang von einem Bauteil des Zugfahrzeugs 3, insbesondere der Sattelplatte 31 mechanisch betätigbar ist. Das Schubelement 13 ist mit einer ersten Feder 15, die im in Fig. 3a bis 3d dargestellten Ausführungsbeispiel als Schraubendruckfeder ausgebildet ist, versehen, um den am Schubelement 13 über das Verbindungselement 14 verbundenen Schmutzdeckel 11 in der in Fig. 3a dargestellten geschlossenen Stellung (Grundstellung) federbelastet vorzusehen. Des Weiteren ist eine zweite Feder 16 vorgesehen, die in der Ausführungsform gemäß Fig. 3a bis 3d als Stahlbandfeder ausgestaltet ist, die den Schmutzdeckel 11 auf die Stirnseite 24 des Königszapfens 21 auflastet, um ein möglichst direktes Aufliegen des Schmutzdeckels 11 auf der Stirnseite 24 des Königszapfens 11 zu erreichen.

Des Weiteren sind an der Schmutzdeckelvorrichtung 1 im Bereich der Lateralführung 12 in Einbauorientierung seitlich schräg nach hinten abgespreizt angeordnete Blattfedern 18 angeordnet, wie in den Fig. 1 und 2 ersichtlich ist. Diese Blattfedern 18 wirken beim Kuppelvorgang mit dem zunächst sehr breiten Einführungsschlitz 32 der Sattelplatte 31 derart zusammen, dass die um den Königszapfen 21 frei drehbar angeordnete Schmutzdeckelvorrichtung 1 in zur Sattelplatte 31 zentraler Orientierung elastisch weich gehalten wird.

Nachfolgend wird der Kuppelvorgang bei einer wie vorangehend beschriebenen Schmutzdeckelanordnung unter Bezugnahme auf die Fig. 3a bis 3d näher beschrieben.

Die teils in Querschnitt dargestellte Situation der Fig. 3a zeigt die Sattelplatte 31 des Zugfahrzeugs 3 in angeschnittener Seitenansicht. Der Sattelauflieger 2 mit seiner Unterseite 20 und dem daran befestigten Königszapfen 21 und der auf dem Königszapfen 21 reitenden Schmutzdeckelvorrichtung 1 ist im Querschnitt dargestellt. In der Situation gemäß Fig. 3a befindet sich das Zugfahrzeug 3 in Ausgangsstellung vor Beginn des Kuppelvorgangs. Diese Situation ist auch in den Fig. 1 und 2 wiedergegeben. Durch Rückwärtsfahrt, dargestellt durch Pfeil R, nähert sich die Sattelplatte 31 des Zugfahrzeugs 3 dem Königszapfen 21 des Sattelaufliegers 2.

Bei weiterer Rückwärtsfahrt gemäß Pfeil R in Fig. 3b wird der Königszapfen 21 von dem noch breit ausgebildeten Einführungsschlitz 32 der Sattelplatte 31 aufgenommen. In Fig. 3b ist nur die rückwärtige Hälfte der Sattelplatte 31 in einer Teilansicht dargestellt. Die Sattelplatte 31 weist einen Niederhalter 33 auf, der die beiden Schenkel der Sattelplatte 31 im Bereich des breiten Einführungsschlitzes 32 unterhalb der Höhenerstreckung des Königszapfens 21 überbrückt. Dieser Niederhalter 33 rutscht somit ungehindert über den Königszapfen 21 und die darauf reitende Schmutzdeckelvorrichtung 1 und gelangt mit dem Mitnehmer 17 des Schubelements 13 der Schmutzdeckelvorrichtung 1 in Kontakt.

Bei weiterer Rückwärtsfahrt R des Zugfahrzeugs 3 gemäß Fig. 3c wird der Mitnehmer 17 und damit das Schubelement 13 gegen die Druckkraft der ersten Feder 15 lateral in Zeichenebene gemäß Fig. 3c nach links verschoben, sodass sich der Schmutzdeckel 11 über das Verbindungselement 14 mit dem Schubelement 13 nach links verschiebt. In Fig. 3c ist die Bohrung 22 des Königszapfens 21 vom Schmutzdeckel 11 bereits halb freigelegt. Ferner ist in Fig. 3c ein Bauteil der an der Sattelplatte 31 des Zugfahrzeugs 3 angeordneten automatischen Kupplung unterhalb des Königszapfens 21 vom Schmutzdeckel 11 in einer Querschnittsdarstellung wiedergegeben. Dieses Bauteil rutscht bei weiterer Rückwärtsfahrt R des Zugfahrzeugs 3 bis zur endgültigen Ausführung des Kuppelvorgangs durch Umschließen des Königszapfens 21 mittels der üblichen Verschlussklauen (hier nicht gesondert als Bauteile mit Bezugszeichen dargestellt) direkt unter den Königszapfen 21 und zentriert sich unter federndem Andruck unterhalb der Stirnseite 24 des Königszapfens 21, sodass die darin befindliche Hubtasse den darin geführten Stecker in die Kontakte in der Bohrung 22 des Königszapfens 21 einführen kann.

Bei der Bewegung von der Situation gemäß Fig. 3c zur Fig. 3d bewegt der Niederhalter 33 den Mitnehmer 17 weiter in Zeichenrichtung links bis der Mitnehmer 17 seine Endposition erreicht und um eine Mitnehmerführung 19 herum angehoben wird, sodass der Niederhalter 33 über das als Rolle 171 ausgebildete Ende des Mitnehmers 17 hinwegrutschen kann. Dabei bleibt jedoch der Niederhalter 33 in der gekuppelten Stellung der Sattelkupplung unterhalb der Rolle des Mitnehmers 17, wie dies in Fig. 3d ersichtlich ist. Somit kann der Schmutzdeckel 11, der nun die Stirnseite 24 und damit die Bohrung 22 des Königszapfens 21 vollständig freigegeben hat, nicht in seine geschlossene Stellung zurückrutschen.

Beim Abkuppeln läuft der gesamte Vorgang in umgekehrter Reihenfolge ab. Dabei wird darauf hingewiesen, dass durch Vorsehen einer kleinen Kröpfung 141 im Verbindungselement 14 der Schmutzdeckel 11 gegen die zweite Feder 16 (Stahlbandfeder) leicht angehoben und somit auf die Stirnfläche 24 des Königszapfens 21 aus seiner zurückgezogenen Stellung gemäß Fig. 3d in die in den Fig. 3a bis 3c dargestellten Stellungen angehoben und verschoben wird. Dabei erfolgt die Rückbewegung des Schubelements 13 mit dem daran befestigten Schmutzdeckel 11 durch Entspannen der ersten Feder 15 von der in der Fig. 3d dargestellten zusammengedrückten Position in die in den Fig. 3a und 3b dargestellte Position, wobei die Rolle 171 des Mitnehmers 17 nach Zurückziehen der Sattelplatte 31 mit dem Niederhalter 33 nach dessen Freigabe über die Mitnehmerführung 19 wieder in die in den Fig. 3c bis 3a dargestellte Position gelangt.

### Bezugszeichenliste

- 1: Schmutzdeckelvorrichtung
- 11: Schmutzdeckel
- 12: Lateralführung
- 13: Schubelement
- 14: Verbindungselement
- 141: Kröpfung
- 15: erste Feder
- 16: zweite Feder
- 17: Mitnehmer
- 171: Rolle
- 18: Blattfeder
- 19: Mitnehmerführung

- 2: Sattelauflieger
- 20: Unterseite
- 21: Königszapfen
- 22: Bohrung
- 23: Nut, Führungsnut
- 24: Stirnseite

- 3: Zugfahrzeug
- 31: Sattelplatte
- 32: Einführungsschlitz
- 33: Betätigungsmittel, Niederhalter

- R: Rückwärtsfahrt

## Patentansprüche

1. Schmutzdeckelanordnung mit einem Sattelauflieger (2) und einem Zugfahrzeug (3) zum Verschliessen eines hohlgebohrten Königszapfens (21) am Sattelauflieger (2) für eine automatische Sattelkupplung, wobei der Königszapfen (21) an der als Gegenlager für eine Sattelplatte (31) des Zugfahrzeugs (3) dienenden Unterseite (20) des Sattelaufliegers (2) angeordnet ist, **dadurch gekennzeichnet, dass** eine Schmutzdeckelvorrichtung (1) an der Unterseite (20) des Sattelaufliegers (2) anliegend und drehbar um den Königszapfen (21) angeordnet ist, wobei diese einen Schmutzdeckel (11) zur Abdeckung der im Königszapfen (21) vorgesehenen Bohrung (22) aufweist und der Schmutzdeckel (11) beim Kuppelvorgang von einer die Bohrung (22) im Königszapfen (21) abdeckenden Grundstellung in eine die Bohrung (22) freigebenden Kuppelstellung verschiebbar an der Schmutzdeckelvorrichtung (1) ausgebildet ist.

2. Schmutzdeckelanordnung nach Anspruch 1, **dadurch gekennzeichnet, dass** die Schmutzdeckelvorrichtung (1) zum Verschieben des Schmutzdeckels (11) eine Lateralführung (12) mit einem Schubelement (13) aufweist, wobei das Schubelement (13) in zum Königszapfen (21) radialer Richtung, parallel zur Unterseite (20) des Sattelaufliegers (2) bewegbar ausgebildet ist und mit dem Schmutzdeckel (11) gekoppelt ist.

3. Schmutzdeckelanordnung nach Anspruch 2, **dadurch gekennzeichnet, dass** an dem Schubelement (13) ein Mitnehmer (17) vorgesehen ist, der beim Kuppelvorgang von einem an der Sattelplatte (31) vorgesehenen Betätigungsmittel (33) des einkuppelnden Zugfahrzeugs (3) mitnehmbar ausgebildet ist, wobei nur Zugfahrzeuge (3) mit automatischer Sattelkupplung dieses Betätigungsmittel (33) an der Sattelplatte (31) aufweisen.

4. Schmutzdeckelanordnung nach Anspruch 2 oder 3, **dadurch gekennzeichnet, dass** in der Lateralführung (12) eine erste Feder (15) vorgesehen ist, die das Schubelement (13) in Richtung der die Bohrung (22) im Königszapfen (21) abdeckenden Grundstellung von der ersten Feder (15) vorbelastet hält.

5. Schmutzdeckelanordnung nach Anspruch 2, 3 oder 4, **dadurch gekennzeichnet, dass** an dem Schubelement (13) eine zweite Feder (16) vorgesehen ist, die den Schmutzdeckel (11) von dieser zweiten Feder (16) belastet in axialer Richtung auf die freie Stirnseite (24) des Königszapfens (21) hält.

6. Schmutzdeckelanordnung nach einem der vorangehenden Ansprüche, **dadurch gekennzeichnet, dass** die Schmutzdeckelvorrichtung (1) eine Breite aufweist, die kleiner als die Weite des Einführungsschlitzes (32) der Sattelplatte (31) ist.

7. Schmutzdeckelanordnung nach Anspruch 6, **dadurch gekennzeichnet, dass** die Schmutzdeckelvorrichtung (1) in Einbausituation an ihren Seitenflanken beidseitig pfeilförmig abgespreizte Blattfedern (18) aufweist.

8. Schmutzdeckelanordnung nach einem der vorangehenden Ansprüche, **dadurch gekennzeichnet, dass** der Königszapfen (21) einen zylindersymmetrischen, nach unten von der Unterseite (20) des Sattelaufliegers (2) vorstehenden Königszapfenkörper hat, wobei im der Unterseite (20) nahen Teil des Königszapfenkörpers eine Führungsnut (23) vorgesehen ist, in der die Schmutzdeckelvorrichtung (1) drehbar um den Königszapfen (21) gehalten ist.

9. Schmutzdeckelanordnung nach einem der Ansprüche 2 bis 8, **dadurch gekennzeichnet, dass** das Betätigungsmittel (33) an der Sattelplatte (31) ein den Einführungsschlitz (32) überbrückender Niederhalter (33) ist, dessen Einbaulage ein freies Durchrutschen des Königszapfens (21) im Einführungsschlitz (32) erlaubt und der mit dem Mitnehmer (17) zusammenwirkt, sodass der Niederhalter (33) beim Kuppelvorgang den Mitnehmer (17) und damit den Schmutzdeckel (11) in die die Bohrung (22) freigebende Kuppelstellung verschiebt und in dieser Stellung gegen den Druck der ersten Feder (15) festhält.

10. Schmutzdeckelvorrichtung (1) für eine Schmutzdeckelanordnung nach einem der vorangehenden Ansprüche.

11. Kuppelverfahren mit einer Schmutzdeckelanordnung nach einem der Ansprüche 1 bis 9 zwischen einem Sattelauflieger (2) und einem Zugfahrzeug (3), wobei das Zugfahrzeug (3) mit seiner Sattelplatte (31) rückwärts unter den Sattelauflieger (2) mit seinem Königszapfen (21) fährt, **dadurch gekennzeichnet, dass** die Schmutzdeckelvorrichtung (1) beim Kuppelvorgang so um den Königszapfen verdreht wird, dass sie sich im Einführungsschlitz (32) der Sattenplatte (31) befindet und bei weiterer Annäherung des Zugfahrzeugs (3) der Schmutzdeckel (11) von seiner die Bohrung (22) im Königszapfen (21) abdeckenden Grundstellung in eine die Bohrung (22) freigebende Stellung verstellt wird und der Kuppelvorgang abgeschlossen wird.

12. Kuppelverfahren nach Anspruch 11, **dadurch gekennzeichnet, dass** die Verstellung des Schmutzdeckels (11) beim Kuppelvorgang gegen eine Federbelastung in Richtung der Grundstellung erfolgt.

13. Kuppelverfahren nach Anspruch 11 oder 12, **dadurch gekennzeichnet, dass** die Verstellung des Schmutzdeckels (11) nur bei einem Zugfahrzeug (3) mit automatischer Sattelkupplung ausgelöst wird.

14. Kuppelverfahren nach Anspruch 11, 12 oder 13, **dadurch gekennzeichnet, dass** die frei um den Königszapfen (21) drehbare Schmutzdeckelvorrichtung (1) mittig zum Einführungsschlitz (32) zentriert wird.

## Claims

1. A dirt cover arrangement having a semitrailer (2) and a towing vehicle (3) for closing a hollow-drilled kingpin (21) at the semitrailer (2) for an automatic fifth wheel coupling, wherein the kingpin (21) is arranged at the underside (20), serving as a counter bearing for a fifth wheel (31) of the towing vehicle (3), of the semitrailer (2), **characterised in that** a dirt cover device (1) is arranged in a manner resting against the underside (20) of the semitrailer (2) and rotatable about the kingpin (21), wherein the dirt cover device (1) has a dirt cover (11) for covering the bore (22) provided in the kingpin (21) and the dirt cover (11) is formed at the dirt cover device (1) to be displaceable during the coupling procedure from an initial position covering the bore (22) in the kingpin (21) into a coupling position freeing the bore (22).

2. A dirt cover arrangement according to claim 1, **characterised in that** the dirt cover device (1) has a lateral guide (12) with a push element (13) for displacement of the dirt cover (11), wherein the push element (13) is movable in a radial direction with respect to the kingpin (21), in a manner parallel to the underside (20) of the semitrailer (2), and is coupled with the dirt cover (11).

3. A dirt cover arrangement according to claim 2, **characterised in that** an entrainer (17) is provided at the push element (13) and is entrainable during the coupling procedure by an actuating means (33), provided at the fifth wheel (31), of the engaging towing vehicle (3), wherein only towing vehicles (3) with automatic fifth wheel coupling have this actuating means (33) at the fifth wheel (31).

4. A dirt cover arrangement according to claim 2 or 3, **characterised in that** a first spring (15) is provided in the lateral guide (12) and keeps the push element (13) preloaded by the first spring (15) in the direction of the initial position covering the bore (22) in the kingpin (21).

5. A dirt cover arrangement according to claim 2, 3 or 4, **characterised in that** a second spring (16) is provided at the push element (13) and holds the dirt cover (11), loaded by this second spring (16), onto the free end face (24) of the kingpin (21) in an axial direction.

6. A dirt cover arrangement according to any one of the preceding claims, **characterised in that** the dirt cover device (1) has a width which is less than the width of the insertion slot (32) of the fifth wheel (31).

7. A dirt cover arrangement according to claim 6, **characterised in that** in the installed situation, the dirt cover device (1) has, at its lateral flanks, leaf springs (18) spread out on both sides in an arrow shape.

8. A dirt cover arrangement according to any one of the preceding claims, **characterised in that** the kingpin (21) has a cylindrically symmetrical kingpin body projecting downwards from the underside (20) of the semitrailer (2), wherein a guide groove (23), in which the dirt cover device (1) is held in a manner rotatable about the kingpin (21), is provided in the part of the kingpin body close to the underside (20).

9. A dirt cover arrangement according to any one of claims 2 to 8, **characterised in that** the actuating means (33) at the fifth wheel (31) is a holding down device (33) spanning the insertion slot (32), the installation position of the holding down device permitting a free slipping through of the kingpin (21) in the insertion slot (32) and the holding down device cooperating with the entrainer (17), so that during the coupling procedure the holding down device (33) displaces the entrainer (17) and thereby the dirt cover (11) into the coupling position freeing the bore (22) and maintains it in this position against the pressure of the first spring (15).

10. A dirt cover device (1) for a dirt cover arrangement according to any one of the preceding claims.

11. A coupling method with a dirt cover arrangement according to any one of claims 1 to 9 between a semitrailer (2) and a towing vehicle (3), wherein the towing vehicle (3) with its fifth wheel (31) travels backwards below the semitrailer (2) with its kingpin (21), **characterised in that** the dirt cover device (1) is during the coupling procedure rotated about the kingpin in a manner that it is located in the insertion slot (32) of the fifth wheel (31) and when the towing vehicle (3) comes closer, the dirt cover (11) is adjusted from its initial position covering the bore (22) in the kingpin (21) into a position freeing the bore (22) and the coupling procedure is finished.

12. A coupling method according to claim 11, **characterised in that** the adjustment of the dirt cover (11) during the coupling procedure takes place against spring loading in the direction of the initial position.

13. A coupling method according to claim 11 or 12, **characterised in that** the adjustment of the dirt cover (11) is only triggered in the case of a towing vehicle (3) with automatic fifth wheel coupling.

14. A coupling method according to claim 11, 12 or 13, **characterised in that** the dirt cover device (1) freely rotatable about the kingpin (21) is centred in the middle with respect to the insertion slot (32).

## Revendications

1. Agencement de couvercle de protection contre les salissures avec une semi-remorque (2) et un véhicule tracteur (3) pour fermer un pivot d'attelage (21) à alésage creux sur la semi-remorque (2) pour un attelage automatique, le pivot d'attelage (21) étant disposé sur la face inférieure (20) de la semi-remorque (2) qui sert de contre-palier pour une sellette d'attelage (31) du véhicule tracteur (3), **caractérisé en ce qu'**un dispositif de couvercle de protection contre les salissures (1) est disposé en appui contre la face inférieure (20) de la semi-remorque (2) et peut tourner autour du pivot d'attelage (21), ledit dispositif comprenant un couvercle de protection contre les salissures (11) pour recouvrir l'alésage (22) prévu dans le pivot d'attelage (21) et le couvercle contre les salissures (11) étant conçu pour être déplacé sur le dispositif de couvercle de protection contre les salissures (1) pendant l'opération d'attelage d'une position de base recouvrant l'alésage (22) dans le pivot d'attelage (21) dans une position d'attelage libérant l'alésage (22).

2. Agencement de couvercle de protection contre les salissures selon la revendication 1, **caractérisé en ce que** le dispositif de couvercle de protection contre les salissures (1) est muni d'un guide latéral (12) avec un élément de poussée (13) pour déplacer le couvercle de protection contre les salissures (11), l'élément de poussée (13) étant conçu pour être mobile dans une direction radiale par rapport au pivot d'attelage (21), parallèlement à la face inférieure (20) de la semi-remorque (2), et étant couplé au couvercle de protection contre les salissures (11).

3. Agencement de couvercle de protection contre les salissures selon la revendication 2, **caractérisé en ce qu'**il est prévu sur l'élément de poussée (13) un entraîneur (17) qui est conçu pour être entraîné pendant l'opération d'attelage par un moyen d'actionnement (33) prévu sur la sellette d'attelage (31) du véhicule tracteur (3) en cours d'attelage, seuls les véhicules tracteurs (3) à attelage automatique ayant ce moyen d'actionnement (33) sur la sellette d'attelage (31).

4. Agencement de couvercle de protection contre les salissures selon la revendication 2 ou 3, **caractérisé en ce qu'**un premier ressort (15) est prévu dans le guide latéral (12), lequel ressort maintient précontraint par le premier ressort (15) l'élément de poussée (13) en direction de la position de base recouvrant l'alésage (22) dans le pivot d'attelage (21).

5. Agencement de couvercle de protection contre les salissures selon la revendication 2, 3 ou 4, **caractérisé en ce qu'**un deuxième ressort (16) est prévu sur l'élément de poussée (13), lequel ressort maintient précontraint par ce deuxième ressort (16) le couvercle de protection contre les salissures (11) en direction axiale sur la face frontale libre (24) du pivot d'attelage (21).

6. Agencement de couvercle de protection contre les salissures selon l'une des revendications précédentes, **caractérisé en ce que** le dispositif de couvercle de protection contre les salissures (1) a une largeur qui est inférieure à la largeur de la fente d'insertion (32) de la sellette d'attelage (31).

7. Agencement de couvercle de protection contre les salissures selon la revendication 6, **caractérisé en ce que** le dispositif de couvercle de protection contre les salissures (1), en situation de montage, est muni sur ses flancs latéraux de ressorts à lames (18) disposés écartés en flèche des deux côtés.

8. Agencement de couvercle de protection contre les salissures selon l'une des revendications précédentes, **caractérisé en ce que** le pivot d'attelage (21) a un corps de pivot d'attelage de symétrie cylindrique saillant vers le bas de la face inférieure (20) de la semi-remorque (2), une rainure de guidage (23) étant prévue dans la partie du corps de pivot d'attelage proche de la face inférieure (20), dans laquelle le dispositif de couvercle de protection contre les salissures (1) est logé rotatif autour du pivot d'attelage (21).

9. Agencement de couvercle de protection contre les salissures selon l'une des revendications 2 à 8, **caractérisé en ce que** le moyen d'actionnement (33) sur la sellette d'attelage (31) est un dispositif de retenue (33) qui chevauche la fente d'insertion (32) et dont la position de montage permet au pivot d'attelage (21) de glisser librement dans la fente d'insertion (32) et qui coopère avec l'entraîneur (17) de sorte que durant l'opération d'attelage le dispositif de retenue (33) déplace l'entraîneur (17) et avec lui le couvercle (11) dans la position d'attelage libérant l'alésage (22) et le maintient dans cette position contre l'effet de pression du premier ressort (15).

10. Dispositif de couvercle de protection contre des salissures (1) pour un agencement de couvercle de protection contre les salissures selon l'une des revendications précédentes.

11. Procédé d'attelage avec un agencement de couvercle de protection contre les salissures selon l'une des revendications 1 à 9 entre une semi-remorque (2) et un véhicule tracteur (3), le véhicule tracteur (3) se déplaçant avec son pivot d'attelage (21) vers l'arrière avec sa sellette d'attelage (31) sous la semi-remorque (2), **caractérisé en ce que** le dispositif de couvercle de protection contre les salissures (1) est tourné autour du pivot d'attelage durant l'opération d'attelage de telle sorte qu'il se trouve dans la fente d'insertion (32) de la sellette d'attelage (31) et, à mesure que le véhicule tracteur (3) s'approche, le couvercle de protection contre les salissures (11) est déplacé de sa position de base recouvrant l'alésage (22) du pivot d'attelage (21) dans une position libérant l'alésage (22), et l'opération d'attelage est achevée.

12. Procédé d'attelage selon la revendication 11, **caractérisé en ce que** le déplacement du couvercle de protection contre les salissures (11) durant l'opération d'attelage se fait contre une contrainte de ressort en direction de la position de base.

13. Procédé d'attelage selon la revendication 11 ou 12, **caractérisé en ce que** le déplacement du couvercle de protection contre les salissures (11) n'est déclenché que dans le cas d'un véhicule tracteur (3) avec attelage automatique.

14. Procédé attelage selon la revendication 11, 12 ou 13, **caractérisé en ce que** le dispositif de couvercle de protection contre les salissures (1), qui peut tourner librement autour du pivot d'attelage (21), est centré sur le milieu de la fente d'insertion (32).
